# EUROPEAN PATENT SPECIFICATION

(11) **EP 4 446 726 B1**
(45) Date of publication and mention of the grant of the patent: **20.05.2026**
(21) Application number: 23827389.0
(22) Date of filing: 24.05.2023
(51) Int. Cl.: G01N 1/36, G01N 19/04, H01M 4/04

(54) **METHOD FOR MANUFACTURING SPECIMEN FOR ADHESION TEST OF ELECTRODE ACTIVE MATERIAL LAYER**
VERFAHREN ZUR HERSTELLUNG EINER PROBE FÜR EINEN HAFTUNGSTEST EINER ELEKTRODENAKTIVMATERIALSCHICHT
PROCÉDÉ POUR FABRICATION D'ÉCHANTILLON POUR TEST D'ADHÉRENCE DE COUCHE DE MATÉRIAU ACTIF D'ÉLECTRODE

(30) Priority: 21.06.2022 KR 20220075353
(43) Date of publication of application: 16.10.2024
(73) Proprietor: LG Energy Solution, Ltd., Seoul 07335 (KR)
(72) Inventor: CHO, Daehee, Daejeon 34122 (KR)
(74) Representative: Goddar, Heinz J.
(86) International application number: PCT/KR2023/007041
(87) International publication number: WO 2023/249269

(56) References cited:
- JP-A- 2009 129 698
- JP-A- 2021 528 814
- JP-B2- 2 963 339
- KR-A- 20190 041 852
- KR-A- 20200 142 744
- US-A1- 2015 346 079
- US-B1- 8 043 449
- US-B2- 7 628 066

## Description

### [Technical Field]

The present application claims the benefit of priority based on Korean Patent Application No. 10-2022-0075353 filed on June 21, 2022.

The present invention relates to a method for fabricating the specimen for testing the adhesive force of the electrode active material layer.

### [Background Art]

As the demand for mobile devices, electric vehicles, etc. is increased, the demand for secondary batteries is rapidly increasing. In particular, among secondary batteries, a lithium secondary battery having high energy density and voltage is commercialized and widely used.

Such a lithium secondary battery has a structure in which an electrode assembly capable of charging and discharging in a positive electrode/separator/negative electrode structure is mounted on a battery case.

The positive electrode and the negative electrode are manufactured by coating or bonding an active material to a current collector to form an active material layer. For example, they are manufactured by mixing an active material, a binder, and an electrically conductive material in a solvent to prepare a slurry, applying the obtained slurry to the current collector, drying it, and rolling it, or are manufactured by adhering an active material previously prepared in the form of a free-standing film by a dry or wet process to a current collector using an adhesive or the like.

If the active material layer is not firmly adhered to the current collector, there may be a problem that the active material layer may peel off due to the stress caused by the volume expansion and decrease of the electrode during the charging and discharging process, and the active material comes off easily even by the momentary pressure at the time of cutting during the process of cutting the electrode. Accordingly, the adhesive state of the active material layer to the current collector plays an important role in the performance of the battery, and to confirm this, a test is being conducted to evaluate the adhesive force of the active material layer.

The measurement of the adhesive force of the active material layer on the current collector is performed by adhering the electrode active material layer to a fixing substrate (e.g., glass substrate) and measuring the adhesive strength while removing the current collector by pulling it in the opposite direction. In this case, if the electrode active material layer of the specimen is not adhered to the correct position of the fixing substrate, accurate measurement results cannot be obtained.

However, the process of attaching the electrode active material layer of the specimen to the fixing substrate is performed manually, and due to this, it is frequently the case that the active material layer adhered obliquely onto the fixing substrate, resulting in poorly fabricated specimens. In addition, there is a problem even in the accuracy of adhesive force measurement accordingly.

### [Prior Art Document]

### [Patent Document]

Korean Laid-open Utility Model Publication No. 20-2011-0000143

US 2015/346079 A1 discloses a method for fabricating a specimen for testing an adhesive force.

### [Disclosure]

### [Technical Problem]

The present invention was made to solve the above problems of the prior art, and thus it is an object of the present invention to provide a method for easily and quickly fabricating a specimen for testing the adhesive force of an electrode active material layer, which has high reliability, using a device for fabricating the specimen.

### [Technical Solution]

In order to achieve the above objects, the description discloses
a device for fabricating a specimen for testing the adhesive force of the electrode active material layer, which comprises
a lower guide panel having a guide groove provided on its upper surface wherein the guide groove guides and accommodates a fixing substrate to which the electrode active material layer is adhered; and
an upper guide panel having a guide hole for guiding the adhesion position of the electrode active material layer to the fixing substrate accommodated in the guide groove,
wherein at least one of the upper guide panel and the lower guide panel is provided with a coupling means between the upper guide panel and the lower guide panel.

In one embodiment of the device, the upper guide panel exists in a form separated from the lower guide panel, and is provided in a form coupled to the lower guide panel when guiding the electrode active material layer; or may be provided in a form in which part or all of it is fixed to the lower guide panel.

In one embodiment of the device, the upper guide panel may be fixed to one side of the lower guide panel by a hinge.

In one embodiment of the device, the upper guide panel may be coupled in a structure in which it slides in the transverse direction on the upper surface of the lower guide panel, any one of the upper guide panel or the lower guide panel may be provided with a guide rail, and the other one of the upper guide panel or the lower guide panel may be provided with a driving unit that slides on the guide rail.

In one embodiment of the present invention, in order to hold the fixing substrate accommodated in the guide groove, any one or more of the length or width of the guide hole may be smaller than the corresponding length or width of the guide groove.

In one embodiment of the device, the guide groove may be in the form of a square pillar with an open upper surface or in the form of a square pillar in which the upper surface and one side wall are open.

In one embodiment of the device, the guide hole may be in the form of a square pillar with an open upper or lower surface or in the form of a square pillar with an open upper or lower surface and one side wall.

In one embodiment of the device, one open side wall of the guide groove and the guide hole may be formed in the same direction.

In one embodiment of the device, the upper guide panel may be a transparent panel.

In order to achieve the above identified objects, the present invention provides a method for fabricating the specimen for testing the adhesive force of the electrode active material layer as defined in claim 1.

### [Advantageous Effects]

The device for fabricating a specimen for testing the adhesive force of an electrode active material layer as described accurately guides the active material layer and the adhesion position of the fixing substrate during specimen fabrication, thereby enabling reliable specimen fabrication easily and quickly.

According to the invention, the method for fabricating the specimen for testing the adhesive force of the electrode active material layer makes it possible to easily and quickly fabricate a highly reliable specimen by using the device for fabricating the specimen.

### [Description of Drawings]

FIG. 1 is a view schematically showing a device for fabricating a specimen for testing the adhesive force of an electrode active material layer provided in the method of the present invention.
FIG. 2 is an exploded view showing a device for fabricating a specimen for testing the adhesive force of an electrode active material layer as an alternative example of a device.
FIG. 3 is a view schematically showing an embodiment of an electrode and a specimen for testing the adhesive force of an electrode active material layer comprising the same.
FIG. 4 is a view schematically showing a method for fabricating a specimen for testing the adhesive force of an electrode active material layer as an embodiment of the present invention.
FIG. 5 is a view schematically showing a method for fabricating a specimen for testing the adhesive force of an electrode active material layer as another non-claimed example.

### [Best Mode]

Hereinafter, embodiments of the present invention will be described in detail with reference to the accompanying drawings so that those skilled in the art can easily carry out the present invention. However, the present invention may be embodied in many different forms and is not limited to the embodiments described herein. The same reference numerals have been assigned to like parts throughout the specification.

When it is mentioned that a certain component "is connected to, provided with, or installed on" another component, it should be understood that it may be directly connected to or installed on another component, but other components may exist in therebetween. On the other hand, it is mentioned that a certain component is "directly connected to or installed on" another component, it should be understood that there are no other components in the middle. Meanwhile, other expressions describing the relationship between the elements, such as "on the upper portion" and "directly on the upper portion " or "between" and "immediately between" or "neighboring to" and "directly neighboring to", etc., should be interpreted similarly.

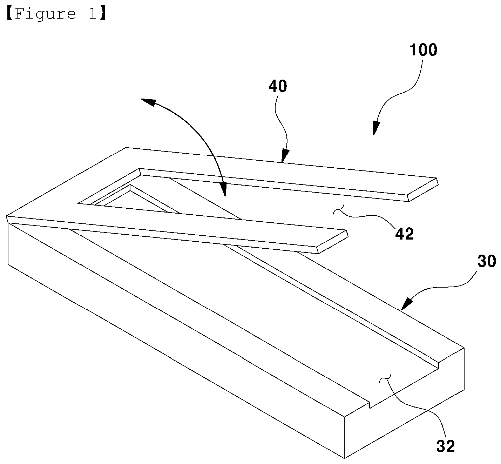

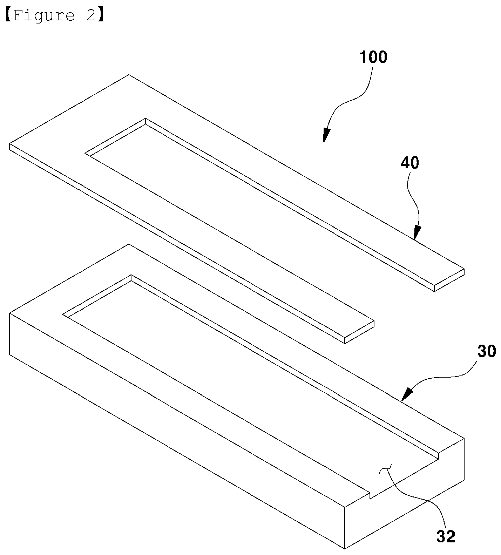

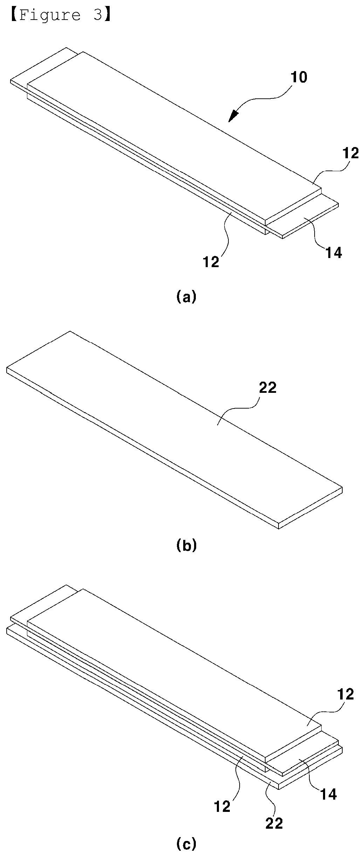

FIG. 1 is a view schematically showing a device 100 for fabricating a specimen for testing the adhesive force of an electrode active material layer as provided in the method of the present invention, FIG. 2 is an exploded view showing a device 100 for fabricating a specimen for testing the adhesive force of an electrode active material layer as an alternative device, not used in the method according to the invention, and FIG. 3 is a view schematically showing an embodiment of an electrode 10 and a specimen 20 for testing the adhesive force of an electrode active material layer including the same. Hereinafter, the present invention will be described with reference to the drawings.

The device 100 for fabricating a specimen for testing the adhesive force of an electrode active material layer is a device used for the fabrication of specimen 20 for testing the adhesive force between the active material layer 12 of the electrode 10 and the current collector 14 (see FIG. 3A), comprising:
a lower guide panel 30 having a guide groove 32 provided on its upper surface wherein the guide groove guides and accommodates a fixing substrate 22 to which the electrode active material layer 12 is adhered; and
an upper guide panel 40 having a guide hole 42 for guiding the adhesion position of the electrode active material layer 12 to the fixing substrate 22 accommodated in the guide groove 32,
wherein any one or more of the upper guide panel 40 and the lower guide panel 30 is provided with a coupling means between the upper guide panel 40 and the lower guide panel 30.

In a lithium secondary battery, if the active material layer is not firmly adhered to the current collector, the active material layer may peel off due to the stress caused by the volume expansion and decrease of the electrode during the charging and discharging process, and there may be a problem that during the process of cutting the electrode, the active material comes off easily even by the momentary pressure at the time of cutting. Therefore, the adhesion state of the active material layer to the current collector plays an important role in the performance of the battery, and thus to confirm this, a test is being conducted to evaluate the adhesive force of the active material layer.

The measurement of the adhesive force on the current collector of the active material layer is performed by adhering the electrode active material layer to a fixing substrate (e.g., glass substrate) and measuring the adhesive strength while removing the current collector by pulling it in the opposite direction. In this case, if the electrode active material layer of the specimen is not adhered to the correct position of the fixing substrate, accurate measurement results cannot be obtained.

However, the process of attaching the electrode active material layer of the specimen to the fixing substrate is performed manually, and due to this, it is frequently the case that the active material layer adheres obliquely onto the fixing substrate, resulting in poorly fabricated specimens. In addition, there is a problem even in the accuracy of adhesive force measurement accordingly.

That is, the adhesive force measurement is performed using a UTM(Universal Testing Machine) device after fabrication of the specimen 20 for testing the adhesive force of the electrode active material layer as shown in (c) of FIG. 3. However, if the electrode active material layer 12 is not accurately attached to the position determined by matching the straightness and parallelism to the fixing substrate 22 constituting the specimen 20 for testing the adhesive force of the electrode active material layer, such inaccurate attachment causes a change in the value of the measured tensile force. Therefore, accurate fabrication of the specimen 20 for testing the adhesive force of the electrode active material layer is absolutely required for accurate measurement of the adhesive force on the current collector of the active material layer.

The device 100 for fabricating a specimen for testing the adhesive force of an electrode active material layer provides the effect of easily and conveniently satisfying the conditions required for the specimen as described above. Therefore, according to the present invention, since the generation of incorrectly fabricated specimens is fundamentally prevented, a specimen with an accurate and uniform shape can be fabricated in a simple way, and thus the adhesive force on the current collector of the electrode active material layer can be easily and accurately measured.

The above coupling means is not particularly limited, and coupling means known in the art may be employed.

In other examples, it does not matter what form the upper guide panel 40 is provided in the device 100 for fabricating a specimen for testing the adhesive force of an electrode active material layer as long as it is in a form that can be coupled to the lower guide panel 30 when guiding the electrode active material layer 12. For example, the upper guide panel 40 exists in a form separated from the lower guide panel 30, and is provided in a form coupled to the lower guide panel 30 when guiding the electrode active material layer 12; or may be provided in a form in which part or all of it is fixed to the lower guide panel 30.

If the upper guide panel 40 is provided in a form separated from the lower guide panel 30, it may be provided in a detachable structure on the upper surface of the lower guide panel 30 when guiding the electrode active material layer 12. In this case, as the detachable structure, structures known in the art may be applied without limitation. For example, a coupling fence for detaching the upper guide panel 40 may be provided on the outer circumference of the upper surface of the lower guide panel 30, or conversely, a coupling fence for detaching the lower guide panel 30 may be provided on the outer circumference of the lower surface of the upper guide panel 40. In addition, a coupling protrusion portion is provided on either the upper guide panel 40 or the lower guide panel 30, and a structure in which a coupling groove portion capable of accommodating the coupling protrusion portion is provided in either the upper guide panel 40 or the lower guide panel 30 is also possible.

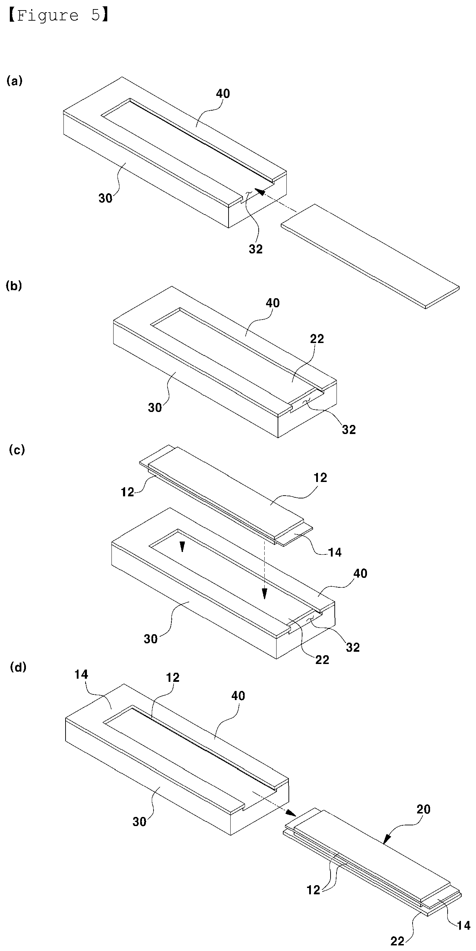

Among the cases in which the upper guide panel 40 is partially or entirely fixed to the lower guide panel 30, the case of the entirely fixed form, as shown in FIG. 5, is a case that the guide groove 32 of the lower guide panel 30 may be formed in a form into which the fixing substrate 22 can be inserted, even in the state where the upper guide panel 40 is entirely fixed. For example, when one side wall of the guide groove 32 has an open form, the fixing substrate 22 may be inserted through the open one side wall of the guide groove 32.

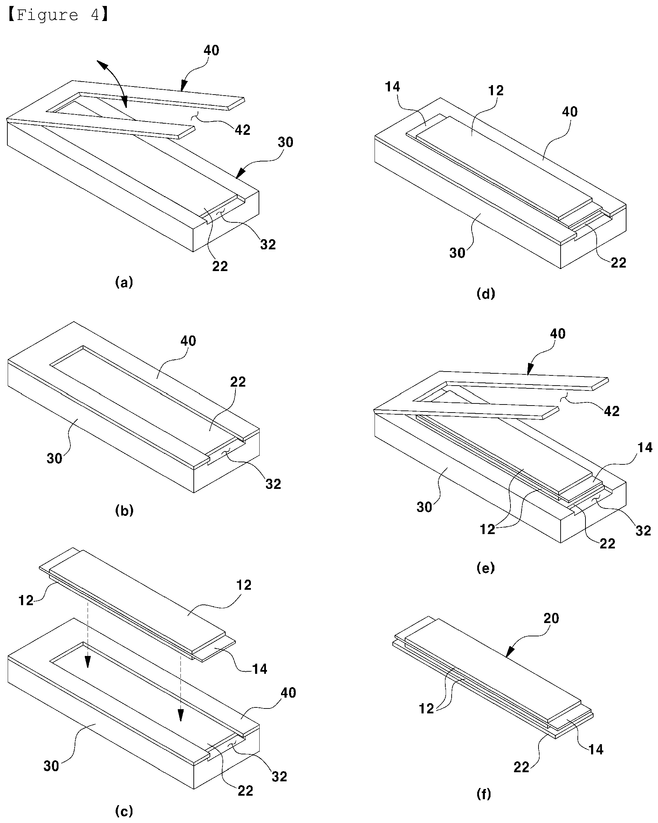

In addition, in the case of the partially fixed form, for example, as shown in FIG. 1, it may be mentioned that the upper guide panel 40 is fixed to one side of the lower guide panel 30 by a hinge. In this case, while the upper guide panel 40 behaves as shown in FIG. 4, fabrication of a specimen for testing the adhesive force of the electrode active material layer can be performed.

Also, for example, the upper guide panel 40 may be coupled in a structure in which the upper guide panel 40 slides in a transverse direction on the upper surface of the lower guide panel 30 slides. In this case, a guide rail is provided on either the upper guide panel 40 or the lower guide panel 30, and a driving part that slides on the guide rail may be provided in the the other one of the upper guide panel 40 or the lower guide panel 30.

Among the above structures, considering the fabrication convenience of the specimen for testing the adhesive force of the electrode active material layer, in particular, a form in which the upper guide panel 40 is fixed to one side of the lower guide panel 30 by a hinge may be preferable.

In one embodiment of the present invention, in order to hold the fixing substrate 22 accommodated in the guide groove 32, any one or more of the length or width of the guide hole 42 may be smaller than the corresponding length or width of the guide groove 32.

In one embodiment of the present invention, the guide groove 32 may be in the form of a square pillar with an open upper surface, and also the guide hole 42 may be in the form of a square pillar with open upper and lower surfaces.

In addition, the guide groove 32 may be in the form of a square pillar with an open upper surface and one side wall, and also the guide hole 42 may be in the form of a square pillar with an open upper and lower surface and one side wall.

Furthermore, one open side wall of the guide groove 32 and one open side wall of the guide hole 42 may be formed in the same direction as shown in FIG. 1. In addition, the same direction of the open one side wall may be a longitudinal direction of one side wall of the device for fabricating a specimen for testing the adhesive force of an electrode active material layer. In addition, when the upper guide panel 40 is fixed to one side of the lower guide panel 30 by a hinge, the one side wall in the longitudinal direction may be the opposite one side wall to which the hinge is fixed.

In one embodiment of the present invention, the upper guide panel 40 may be a transparent panel. When formed as a transparent panel as described above, since the visibility of the fixing substrate 22 or the like in the downward direction is improved, it may be preferable.

In one embodiment of the present invention, as the material of the upper guide panel 40, for example, acrylic resin may be used, but is not limited thereto. In this case, as described above, the upper guide panel 40 may be provided as a transparent panel.

As the material of the lower guide panel 30, a material resistant to heat and humidity environment can be preferably used. For example, a bakelite material may be used, but is not limited thereto.

In one embodiment of the present invention, the electrode 10 may have a form in which the current collector 14 and an active material layer 12 are stacked on one or more surfaces of the current collector. For example, the electrode 10 may have a form in which active material layers 12 are formed on both sides of the current collector 14 as shown in FIG. 3A.

The present invention provides a method for fabricating the specimen for testing the adhesive force of the electrode active material layer as defined in claim 1.

The method for fabricating the specimen is a method for fabricating a specimen 20 for testing the adhesive force of the electrode active material layer by using the device 100 for fabricating a specimen for testing the adhesive force of an electrode active material layer, which comprises the steps of,
(a) positioning the fixing substrate 22 on the guide groove 32 provided on the lower guide panel 30 (FIGS. 4A and 4B);
(b) adhering the electrode active material layer 12 to the upper surface of the fixing substrate 22 through the guide hole 42 provided in the upper guide panel 40 (FIGS. 4C and 4D); and
(c) separating the specimen 20 for testing the adhesive force of the electrode active material layer from the device 100 for fabricating the specimen 20 (FIGS. 4E and 4F).

The present invention further comprises, after the step (a), a step of coupling the upper guide panel 40 to the upper portion of the lower guide panel 30 so that the guide hole 42 and the guide groove 32 overlap (FIGS. 4A and 4B).

The present invention further comprises a step of releasing the coupling of the upper guide panel 40 to the upper portion of the lower guide panel 30 before separating the specimen 20 for testing the adhesive force of the electrode active material layer in step (c) above (FIG. 4E).

In one embodiment of the present invention, when adhering the electrode active material layer 12 in step (b), the adhering may be performed by a method known in the art. For example, it can be implemented by a method of applying an adhesive to the fixing substrate 22 or the active material layer 12 and adhering them, or a method of attaching a double-sided tape to the fixing substrate 22 or the active material layer 12.

Although the present invention has been described in relation to the above-mentioned preferred embodiments, it is possible to make various modifications and variations. Accordingly, the appended claims will cover these modifications and variations insofar as they fall within the scope of the present invention.

**[Description of Symbol]**

| | | | |
|---|---|---|---|
| 10: | Electrode | 12: | Active material layer |
| 14: | current collector | 20: | Specimen for testing adhesive force of electrode active material layer |
| 22: | Fixing substrate | 30: | Lower guide panel |
| 32: | Guide groove | 40: | Upper guide panel |
| 42: | Guide hole | | |
| 100: | Device for fabricating specimen for testing adhesive force of electrode active material layer | | |

## Claims

1. A method for fabricating a specimen (20) for testing an adhesive force of an electrode active material layer (12) comprising the steps of:
a) providing a device (100) for fabricating a specimen (20) for testing the adhesive force of the electrode active material layer (12), comprising:
a lower guide panel (30) having a guide groove (32) provided on its upper surface wherein the guide groove (32) guides and accommodates a fixing substrate (22) to which the electrode active material layer (12) is adhered, and
an upper guide panel (40) having a guide hole (42) for guiding an adhesion position of the electrode active material layer (12) to the fixing substrate (22) accommodated in the guide groove (32),
wherein the upper guide panel (40) is fixed to one side of the lower guide panel (30) by a hinge,
wherein the guide hole (42) is in a form of a square pillar with open upper and lower surfaces or in a form of a square pillar with open upper and lower surfaces and one side wall,
wherein the guide groove (32) is in a form of a square pillar with an open upper surface or in a form of a square pillar in which the upper surface and one side wall are open,
wherein any one or more of a length or a width of the guide hole (42) is smaller than the corresponding length or width of the guide groove (32) in order to hold the fixing substrate (22) accommodated in the guide groove (32);
b) opening the upper guide panel (40) from an upper surface of the lower guide panel (30) by operation of the hinge;
c) positioning a fixing substrate (22) in the guide groove (32) provided on the lower guide panel(30);
d) coupling the upper guide panel (40) to the upper surface of the lower guide panel (30) by operation of the hinge such that the guide hole (42) overlaps the guide groove;
e) adhering the electrode active material layer (12) to an upper surface of the fixing substrate (22) through the guide hole (42) provided in the upper guide panel (40);
f) opening the upper guide panel (40) from an upper surface of the lower guide panel (30) by operation of the hinge; and
g) separating the specimen (20) for testing the adhesive force of the electrode active material layer (12) from the device (100) for fabricating the specimen.

2. The method for fabricating the specimen (20) according to claim 1, wherein one open side wall of the guide groove and the guide hole are formed in a same direction.

3. The method for fabricating the specimen (20) according to claim 1, wherein the upper guide panel is a transparent panel.

4. The method for fabricating the specimen for testing the adhesive force of the electrode active material layer according to claim 1, further comprising a step of attaching a double-sided tape to the fixing substrate or the active material layer upon adhesion of the electrode active material layer in step (b) above.

## Patentansprüche

1. Verfahren zum Herstellen einer Probe (20) zum Testen einer Haftkraft einer Elektrodenaktivmaterialschicht (12), das die Schritte umfasst:
a) Bereitstellen einer Vorrichtung (100) zum Herstellen einer Probe (20) zum Testen der Haftkraft der Elektrodenaktivmaterialschicht (12), die umfasst:
eine untere Führungsplatte (30) mit einer Führungsnut (32), die auf ihrer oberen Oberfläche vorgesehen ist, wobei die Führungsnut (32) ein Befestigungssubstrat (22) führt und aufnimmt, an dem die Elektrodenaktivmaterialschicht (12) haftet, und
eine obere Führungsplatte (40) mit einem Führungsloch (42) zum Führen einer Haftposition der Elektrodenaktivmaterialschicht (12) an dem Befestigungssubstrat (22), das in der Führungsnut (32) aufgenommen ist,
wobei die obere Führungsplatte (40) durch ein Scharnier an einer Seite der unteren Führungsplatte (30) befestigt ist,
wobei das Führungsloch (42) in Form einer quadratischen Säule mit offenen oberen und unteren Oberflächen oder in Form einer quadratischen Säule mit offenen oberen und unteren Oberflächen und einer Seitenwand vorliegt,
wobei die Führungsnut (32) in Form einer quadratischen Säule mit einer offenen oberen Oberfläche oder in Form einer quadratischen Säule vorliegt, in der die obere Oberfläche und eine Seitenwand offen sind,
wobei eine Länge und/oder eine Breite des Führungslochs (42) kleiner ist als die entsprechende Länge oder Breite der Führungsnut (32), um das Befestigungssubstrat (22) zu halten, das in der Führungsnut (32) aufgenommen ist;
b) Öffnen der oberen Führungsplatte (40) von einer oberen Oberfläche der unteren Führungsplatte (30) durch Betätigen des Scharniers;
c) Positionieren eines Befestigungssubstrats (22) in der Führungsnut (32), die auf der unteren Führungsplatte (30) vorgesehen ist;
d) Koppeln der oberen Führungsplatte (40) mit der oberen Oberfläche der unteren Führungsplatte (30) durch Betätigen des Scharniers, so dass das Führungsloch (42) die Führungsnut überlappt;
e) Haften der Elektrodenaktivmaterialschicht (12) an einer oberen Oberfläche des Befestigungssubstrats (22) durch das Führungsloch (42), das in der oberen Führungsplatte (40) vorgesehen ist;
f) Öffnen der oberen Führungsplatte (40) von einer oberen Oberfläche der unteren Führungsplatte (30) durch Betätigen des Scharniers; und
g) Trennen der Probe (20) zum Testen der Haftkraft der Elektrodenaktivmaterialschicht (12) von der Vorrichtung (100) zum Herstellen der Probe.

2. Verfahren zum Herstellen der Probe (20) nach Anspruch 1, wobei eine offene Seitenwand der Führungsnut und das Führungsloch in einer gleichen Richtung ausgebildet sind.

3. Verfahren zum Herstellen der Probe (20) nach Anspruch 1, wobei die obere Führungsplatte eine transparente Platte ist.

4. Verfahren zum Herstellen der Probe zum Testen der Haftkraft der Elektrodenaktivmaterialschicht nach Anspruch 1, das ferner einen Schritt des Anbringens eines doppelseitigen Bands an dem Befestigungssubstrat oder der Aktivmaterialschicht nach dem Haften der Elektrodenaktivmaterialschicht in dem obigen Schritt (b) umfasst.

## Revendications

1. Procédé de fabrication d'un spécimen (20) pour tester une force d'adhérence d'une couche de matériau actif d'électrode (12) comprenant les étapes consistant à :
a) fournir un dispositif (100) pour fabriquer un spécimen (20) pour tester la force d'adhérence de la couche de matériau actif d'électrode (12), comprenant :
un panneau de guidage inférieur (30) ayant une rainure de guidage (32) fournie sur sa surface supérieure, dans lequel la rainure de guidage (32) guide et loge un substrat de fixation (22) auquel est adhérée la couche de matériau actif d'électrode (12) et
un panneau de guidage supérieur (40) ayant un trou de guidage (42) pour guider une position d'adhérence de la couche de matériau actif d'électrode (12) au substrat de fixation (22) logé dans la rainure de guidage (32),
dans lequel le panneau de guidage supérieur (40) est fixé à un côté du panneau de guidage inférieur (30) par une charnière,
dans lequel le trou de guidage (42) est sous forme d'un pilier carré avec des surfaces supérieure et inférieure ouvertes ou sous forme d'un pilier carré avec des surfaces supérieure et inférieure ouvertes et une paroi latérale,
dans lequel la rainure de guidage (32) est sous forme d'un pilier carré avec une surface supérieure ouverte ou sous forme d'un pilier carré dans lequel la surface supérieure et une paroi latérale sont ouvertes,
dans lequel l'une quelconque d'une ou plusieurs d'une longueur ou d'une largeur du trou de guidage (42) est plus petite que la longueur ou la largeur correspondante de la rainure de guidage (32) afin de tenir le substrat de fixation (22) logé dans la rainure de guidage (32) ;
b) ouvrir le panneau de guidage supérieur (40) d'une surface supérieure du panneau de guidage inférieur (30) en faisant fonctionner la charnière ;
c) positionner un substrat de fixation (22) dans la rainure de guidage (32) fournie sur le panneau de guidage inférieur (30) ;
d) accoupler le panneau de guidage supérieur (40) à la surface supérieure du panneau de guidage inférieur (30) en faisant fonctionner la charnière de sorte que le trou de guidage (42) chevauche la rainure de guidage ;
e) faire adhérer la couche de matériau actif d'électrode (12) à une surface supérieure du substrat de fixation (22) à travers le trou de guidage (42) fourni dans le panneau de guidage supérieur (40) ;
f) ouvrir le panneau de guidage supérieur (40) d'une surface supérieure du panneau de guidage inférieur (30) en faisant fonctionner la charnière ; et
g) séparer le spécimen (20) du dispositif (100) pour fabriquer le spécimen afin de tester la force d'adhérence de la couche de matériau actif d'électrode (12).

2. Procédé de fabrication du spécimen (20) selon la revendication 1, dans lequel une paroi latérale ouverte de la rainure de guidage et le trou de guidage sont formés dans une même direction.

3. Procédé de fabrication du spécimen (20) selon la revendication 1, dans lequel le panneau de guidage supérieur est un panneau transparent.

4. Procédé de fabrication du spécimen pour tester la force d'adhérence de la couche de matériau actif d'électrode selon la revendication 1, comprenant en outre une étape consistant à attacher un ruban adhésif double face au substrat de fixation ou à la couche de matériau actif lors de l'adhérence de la couche de matériau actif d'électrode à l'étape (b) ci-dessus.
